# EUROPEAN PATENT SPECIFICATION

(11) **EP 1 566 220 B1**
(45) Date of publication and mention of the grant of the patent: **08.07.2009**
(21) Application number: 04003849.9
(22) Date of filing: 20.02.2004
(51) Int. Cl.: B05B 1/08, B60S 1/52

(54) **Screen wash nozzle**
Scheibenwaschdüse
Buse de lavage pour pare-brise

(43) Date of publication of application: 24.08.2005
(73) Proprietor: Kautex Textron GmbH & Co. KG., 53229 Bonn (DE)
(72) Inventor: Claydon, Malcom, Worcester WR2 6AE (GB); Jenkins, Martyn, Griffithstown Ponty Pool NP4 SEZ (GB); Walters, Sarah, Ammanford SAI8 3PB (GB)
(74) Representative: Kierdorf, Theodor

(56) References cited:
- US-A- 4 185 777
- US-A- 5 213 269
- US-A1- 2003 234 303
- US-B1- 6 354 515
- PATENT ABSTRACTS OF JAPAN vol. 2002, no. 07, 3 July 2002 (2002-07-03) & JP 2002 067887 A (NIPPON VINYLON KK), 8 March 2002 (2002-03-08)

## Description

The invention relates to a screen wash nozzle comprising a nozzle body with a connection piece for supplying cleaning fluid to the nozzle and with a compartment for receiving a jet chip, said jet chip having at least two fluid channels to form multiple pencil jets of washing fluid to be discharged.

A screen wash nozzle is generally known from US 6,520,424. This document discloses a wind screen washer jet with an integrated jet chip. This washer jet is used for spraying front or rear wind screens of automobiles and consists of a housing with a connector tube for the spray water and a chamber for integrating a jet chip. Said jet chip has a central opening through which the water flows and from which several semicircular channels are guided outwards in a fan shape. The channels formed in the chip are opened towards one end and blocked off by the chamber walls at the other end after the jet has been inserted so that they are watertight. The housing of this screen wash nozzle is manufactured by injection-molding a hard plastic material. The jet chip or nozzle chip consists of a soft, elastic thermoplastic material and is injection molded together with the housing in the same mold.

The design described above suffers from the disadvantage that the jet angle can only be adjusted in one plane. In order to enhance compatibility of the nozzle over a range of vehicles, it is required to provide means for adjusting the emerging water jet relative to the wind shield in accordance with the desired angle of impact. Due to the fact that the jet chip is fixed relative to the nozzle housing, it is necessary to mount the nozzle housing in pivotable fashion. This is considered to be costly and complicated.

A washer nozzle device for vehicles a according to the preamble of claim 1 is for instance disclosed in U.S. 6,354,515. This document deals with the issue of providing a multiple stream washer nozzle device in which a nozzle is easily installed in a body and the injection direction is easily adjusted.

Another type of spray device for automotive applications is for instance disclosed in U.S. 2003/0234303 A1. This publication deals with a fluidic insert that receives fluid under pressure from a fluid inlet tube and generates a specified spatial distribution of the fluid exiting the insert. The fluid insert is of the oscillating type, fluidic circuits are fabricated respectively into the top and bottom outer surfaces of the insert which is in one described embodiment sealed by so-called "fliptops" or "cover plates" which are supposed to be generally known from U.S. patent No. 5,845,845.

The aforementioned reference generally deals with fluidic spray nozzles as opposed to fluid spray nozzles. These fluidic spray nozzles generally have an oscillator designed into the chip. One problem dealt with in U.S: 2003/0234303 is that of sealing between the oscillator chip and the mating surface of the nozzle body. Another oscillator type nozzle is for instance disclosed in patent abstracts of Japan, Vol. 2002, No. 7, 3rd July, 2002. Another fluidic oscillator is described by U.S. patent No. 5,213,269. The fluidic oscillator described in this document is not in the form of a jet chip but rather molded in one piece. One downstream end wall of the oscillator chamber is connected to the main molded body of the nozzle via molded hinge.

It is therefore an object of the present invention to provide a screen wash nozzle which can easily be adapted over a range of vehicles without the necessity to provide costly adjustment mechanisms for the complete nozzle.

This object is achieved by the characterizing features of claim 1.

The jet chip is made as an interchangeable insert which can be inserted and removed from said compartment so that a variety of different output angles for the fluid jet emerging the nozzle can be obtained by simply interchanging the jet chip.

Since the fluid channel for emerging the cleaning fluid extends across the split surface of the jet chip, the jet chip can be manufactured by injection molding of thermoplastic material in a simple two piece injection molding tool without the need for complex and delicate core pins. It is evident for a person skilled in the art that the design according to the present invention allows to manufacture a single jet chip such that a plurality of fluid channels with a variety of complex output angles can be realized.

Although the jet chip can be assembled from a plurality of block like elements which could be fitted together, preferably the jet chip consists of two complementary halves which when inserted into the compartment are fitted together to form a unit.

In one preferred embodiment according to the present invention the axis of the fluid channels are oriented such that they form two diverging jets but do not intersect. In other words the mating split surfaces of the jet chip can be designed such that the axis of the fluid channels are skewed. In case of a jet chip in single piece design such orientation of the fluid channels would require a complex molding tool with movable core pins for forming each fluid channel.

Preferably the channel grooves are surrounded by sealing surfaces. These sealing surfaces are elevated surfaces surrounding the channel grooves forming a seal solely from compression of the chip due to abutment of the sealing surfaces following insertion of the chip into the compartment.

The nozzle body may be obtained by injection molding of a relative hard thermoplastic material such as ABS or POM. The chip may be obtained by injection molding of polyamide or an even softer material.

In the preferred embodiment according to the invention the halves of the jet chip are hinged together by a flexible strip of material that allows the joint halves to be folded together to form a single unit that can then be inserted into the nozzle body.

The halves forming the jet chip may comprise location devices such as pins and sockets so as to ensure that the integrity of the fluid channels is preserved on assembly.

Preferably the channel grooves are provided in each of the split surfaces of the halves, complementary channel grooves of each half thereby forming the fluid channels when fitted together.

Although for example the channel grooves may be provided in only one half so that the channels are covered by the second half, it is appreciated that complementary channel grooves are provided in each half so that the parting plane of the jet chip intersects the axis of the fluid channels.

In the preferred embodiment of the invention one half of the jet chip has a central opening extending through the entire thickness of said half in order to form a fluid chamber into which the fluid channels open.

Preferably the jet chip comprises insertion guides which are constructed in order to ensure correct orientation of the jet chip during assembly.

Alternatively at least one of the outer surfaces of the jet chip can be provided with optical recognition characters to identify the insert to automated assembly equipment.

The invention will hereinafter be explained by way of example. One embodiment of the invention which is described in greater detail below is illustrated in the drawings. The drawings show:

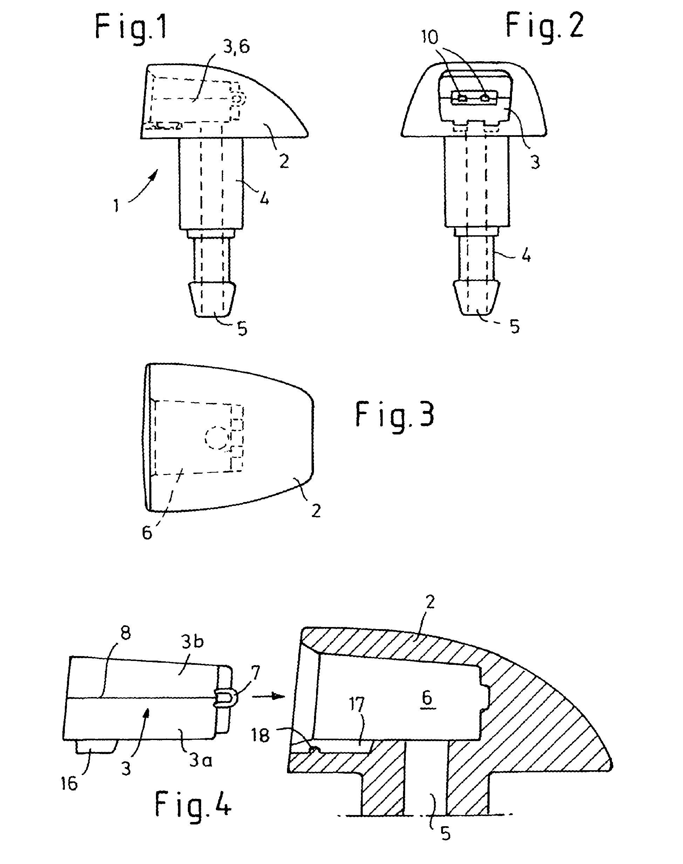

- Fig. 1: a side elevation view of the screen wash nozzle according to the invention,
- Fig. 2: a front elevation view of the screen wash nozzle shown in figure 1,
- Fig. 3: a top view of the screen wash nozzle according to the invention,
- Fig. 4: an exploded view of the nozzle body and the jet chip to be inserted, the nozzle body being sectioned,
- Fig. 5: a perspective view of the jet chip according to the invention prior to assembly,
- Fig. 6: a top view of the jet chip illustrated in figure 5,
- Fig. 7: a sectional view along the lines VII-VII in figure 6,
- Fig. 8: a sectional view of the jet chip in a preassembled state,
- Fig. 9: a top view of the jet chip as illustrated in figure 8,

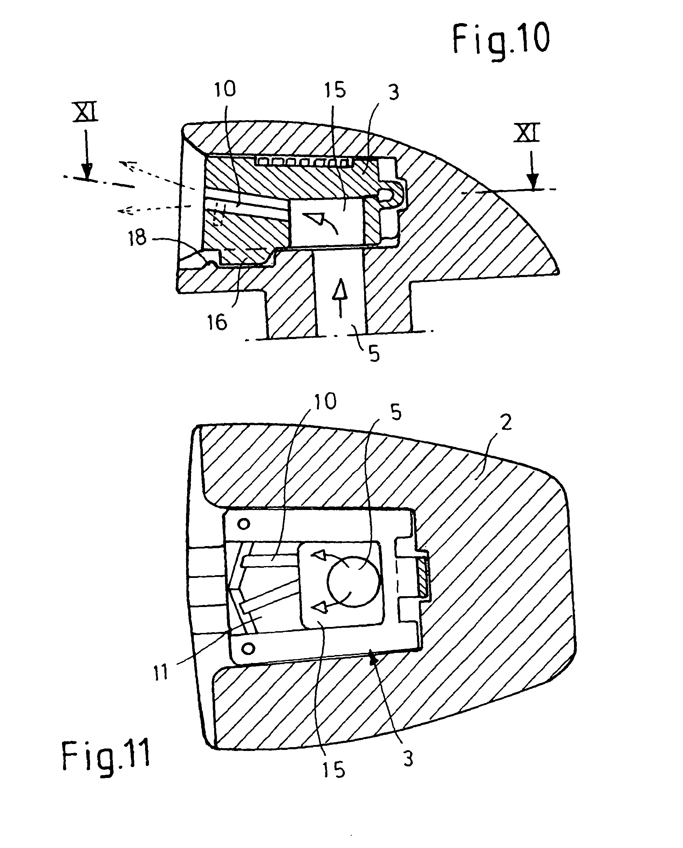

- Fig. 10: a cross sectional view of the upper part of the nozzle body with the jet chip inserted,
- Fig. 11: a sectional view along the lines XI-XI in figure 10.

The screen wash nozzle (1) is used for spraying front or rear wind screens of automobiles. It is to be understood that the inventive screen wash nozzle also may be used for head lamp cleaning applications. The screen wash nozzle (1) comprises a nozzle body (2) which is designed as a housing for receiving an integrated jet chip through which a cleaning fluid may be sent out in form of one or multiple pencil jets towards a screen to be cleaned. The nozzle body (2) which is preferably manufactured by injection-molding of hard thermoplastic material is provided with an integrally formed connector tube for supplying a washing fluid such as spray water to the nozzle. In the illustrated embodiment the upstream end of the connector tube has a mushroom shaped head for receiving a washing fluid hose. The connector tube has a central bore (5) which opens into a rectangular compartment (6) for receiving the jet chip (3).

The jet chip (3) is also manufactured by injection-molding of thermoplastic material, however, the thermoplastic material of the jet chip (3) is slightly more elastic and slightly softer than the material of the nozzle body (2). The jet chip (3) is insertable and removable from the compartment (6) of the nozzle body (2) and thus interchangeable.

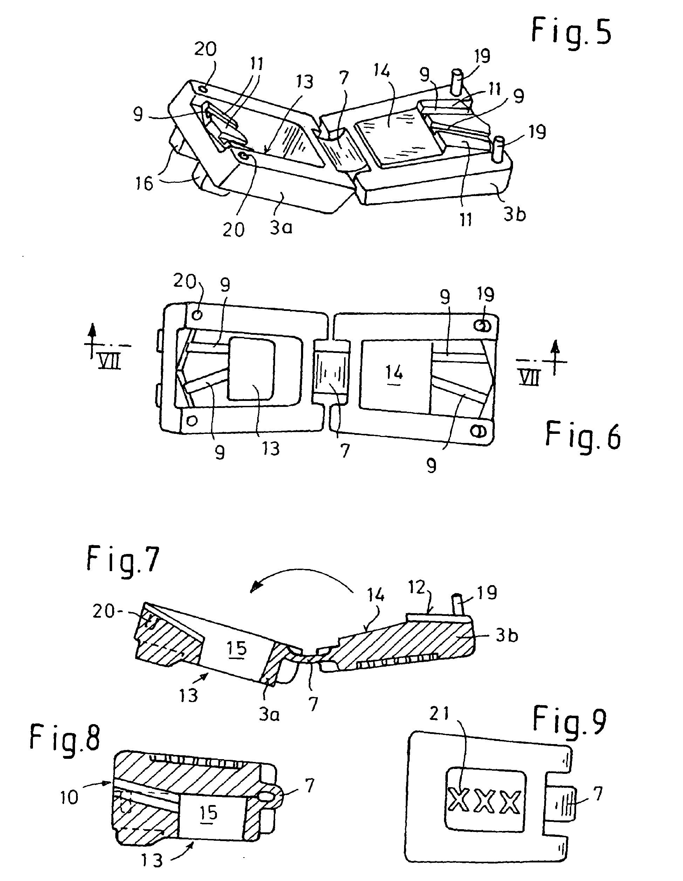

As can be taken from figure 5 which shows a perspective view of the jet chip (3) in an unfolded and not assembled state, said jet chip (3) consists of two complementary halves (3a and 3b) which are connected to each other or hinged together by a flexible strip (7) which is integrally formed with the halves (3a, 3b). It is clear to those skilled in the art that the two halves not necessarily have to be formed in a single piece design. The flexible strip (7) allows the joint halves to be folded together to a single unit as illustrated in figures 7 and 8. Each half has a split surface; these split surfaces are abutting each other in the folded state of the jet chip (3) thereby forming a parting plane (8).

In each of the surfaces of the complementary halves (3a, 3b) facing each other, semicircular channel grooves (9) are provided which form fluid channels (10) when the halves (3a, 3b) are folded together. The axis of the fluid channels (10) diverge in flow direction of the washing fluid but do not intersect. Through the fluid channels (10) washing fluid may be discharged towards a wind shield or head lamp screen in case spray water is supplied via connector tube (4) as will be described more detailed below.

In case of the illustrated embodiment in each half (3a, 3b) two channel grooves are provided which form in the folded state of the jet chip (3) two fluid channels (10) from which washing fluid may be discharged in form of two pencil jets. It is to be understood that the channel grooves (9) do not necessarily have a semicircular cross section; the cross section of the channel grooves might, for instance, have a rectangular or any other cross section.

In the illustrated embodiment the parting plane (8) of the halves (3a, 3b) intersects the axis of the fluid channels which more or less extend in the parting plane (8) of the jet chip (3).

In order to ensure fluid tightness of the fluid channels (10), the channel grooves (9) are surrounded by sealing surfaces (11). The sealing surfaces (11) of the right half (3b) in figure 5 are elevated and protrude out of the parting plane (8) whereas the sealing surfaces (11) of the left half (3a) of the jet chip (3) are slightly depressed with respect to the parting plane (8) of the jet chip (3). The parting plane (12) of the sealing surfaces (11) is slightly upwardly inclined in the downstream direction of the washing fluid with respect to the parting plane (8) of the jet chip (3). Size and shape of the sealing surfaces (11) are chosen such that the abutting sealing surfaces (11) will be compressed following insertion of the jet chip (3) into the compartment (6) of the nozzle body. Thereby a seal between the fluid channels (10) is formed solely from compression of the jet chip (3).

In the left half (3a) of the jet chip (3) shown in figures 5 to 7 a central opening (13) is provided which extends over the entire thickness of said half (3a). In the folded state the central opening (13) is covered by a rectangular elevated surface (14) of the right half (3b). This elevated surface (14) and the central opening (13) form a fluid chamber (15) which functions as a kind of manifold for the fluid channels (10) which open into the fluid chamber (15). The fluid chamber (15) is in alignment with the bore (5) of the connector tube (4) when the jet chip (3) is inserted into the nozzle body (2).

In case of actuation of a washing fluid pump washing fluid such as spray water flows through the bore (5) to the fluid chamber (15) and will be discharged through the fluid channels (10).

The fluid chamber (15) as well as the elevated surface (14) have a rectangular cross section, however, it will be understood that the cross section of the fluid chamber (15) as well as the cross section of the elevated surface (14) may be round or of any other shape.

In order to ensure correct orientation of the jet chip (3) during insertion into the compartment (6), the half (3a) of the jet chip (3) which is to be located upstream of the washing fluid is on its lower side provided with two spaced apart fins (16) which are to be inserted into corresponding grooves (17) of the nozzle body (2). In order to secure the jet chip (3) in the compartment against the pressure of the washing fluid, notches (18) are arranged in the grooves (17). These notches (18) engage the fins (16) when the jet chip (3) is fully inserted into the compartment (6). In order to allow insertion of the jet chip (3) into the compartment (6), the leading ends of the fins (16) are slightly inclined so that the fins (16) can slide over the notches (18) during insertion of the jet chip (3).

As this can be taken from figure 5 the halves (3a and 3b) are provided with pins (19) and corresponding sockets (20) so as to ensure correct preassembly of the jet chip (3) prior to insertion into the compartment (6).

The surface of the jet chip opposite the fins (16) additionally contains optical recognition characters (21) to identify the insert to automated assembly equipment.

### References

- 1: screen wash nozzle
- 2: nozzle body
- 3: jet chip
- 3a, 3b: halves
- 4: connector tube
- 5: bore
- 6: compartment
- 7: strip
- 8: parting plane
- 9: channel grooves
- 10: fluid channels
- 11: sealing surface
- 12: parting plane of the sealing surfaces
- 13: central opening
- 14: elevated surface
- 15: fluid chamber
- 16: fins
- 17: grooves
- 18: notches
- 19: pins
- 20: sockets
- 21: recognition characters

## Claims

1. Screen wash nozzle (1) comprising a nozzle body (2) with a connection piece for supplying cleaning fluid to the nozzle and with a compartment (6) for receiving a jet chip (3), said jet chip having at least two fluid channels which form multiple pencil jets of washing fluid to be discharged, **characterized in that** the jet chip (3) has at least two mating split surfaces which abut each other in sealing relationship and which form the fluid channel (10) when fitted together and the jet chip is formed as an interchangeable insert.

2. Screen wash nozzle (1) according to claim 1, **characterized in that** the jet chip (3) consists of two complementary halves (3a, 3b) which before inserted into the compartment (6) are fitted together to form a unit.

3. Screen wash nozzle (1) according to one of the preceding claims, **characterized in that** at least one half (3a, 3b) comprises at least one channel groove (9) which at least partially forms said fluid channel (10).

4. Screen wash nozzle (1) according to one of the preceding claims, **characterized in that** the axis of the fluid channels (10) are oriented such that they form two diverging jets, but do not intersect.

5. Screen wash nozzle (1) according to one of the preceding claims, **characterized in that** the channel grooves (9) are surrounded by sealing surfaces (11).

6. Screen wash nozzle (1) according to one of the claims 2 to 5, **characterized in that** the halves of the jet chip (3) are hinged together by a flexible strip (7) of material.

7. Screen wash nozzle (1) according to one of the claims 2 to 6, **characterized in that** the halves (3a, 3b) forming the jet chip (3) comprise location devices such as pins (19) and sockets (20).

8. Screen wash nozzle (1) according to one of the claims 2 to 7, **characterized in that** channel grooves (9) are provided in each of the split surfaces of the halves (3a, 3b), complementary channel grooves (9) of each half thereby forming the fluid channels (10) when fitted together.

9. Screen wash nozzle (1) according to claim 8, **characterized in that** the parting plane (8) of the jet chip (3) intersects the axis of the fluid channels (10).

10. Screen wash nozzle (1) according to one of the claims 2 to 9, **characterized in that** one half of the chip (3) has a central opening (13) extending through the entire thickness of said half in order to form a fluid chamber (15).

11. Screen wash nozzle (1) according to one of the preceding claims, **characterized in that** the jet chip (3) comprises insertion guides which are constructed in order to ensure correct orientation during assembly.

## Patentansprüche

1. Scheibenwaschdüse (1) umfassend einen Düsenkörper (2) mit einem Verbindungsstück für die Zufuhr eines Reinigungsfluids an die Düse und mit einem Fach (6) zur Aufnahme eines Strahlenchips (3), wobei der Strahlenchip wenigstens zwei Fluidkanäle umfasst, die mehrere stiftförmige Strahlen des auszustoßenden Reinigungsfluids erzeugen, **dadurch gekennzeichnet, dass** der Strahlenchip (3) wenigstens zwei zueinander passende Trennflächen aufweist, die gegeneinander in dichtender Art und Weise anliegen, wobei die Trennflächen im zusammengesetzten Zustand die Fluidkanäle (10) bilden und der Strahlenchip als austauschbarer Einsatz ausgebildet ist.

2. Scheibenwaschdüse (1) nach Anspruch 1, **dadurch gekennzeichnet, dass** der Strahlenchip (3) aus zwei zueinander komplementären Hälften (3a, 3b) besteht, die vor dem Einsetzen in das Fach (6) zu einer Einheit zusammengesetzt werden.

3. Scheibenwaschdüse (1) nach einem der vorhergehenden Ansprüche, **dadurch gekennzeichnet, dass** wenigstens eine Hälfte (3a, 3b) wenigstens eine Kanalnut (9) umfasst, die wenigstens teilweise den Fluidkanal (10) bildet.

4. Scheibenwaschdüse (1) nach einem der vorhergehenden Ansprüche, **dadurch gekennzeichnet, dass** die Achsen der Fluidkanäle (10) so ausgerichtet sind, dass sie zwei divergierende Strahlen formen, dass diese sich jedoch nicht schneiden.

5. Scheibenwaschdüse (1) nach einem der vorhergehenden Ansprüche, **dadurch gekennzeichnet, dass** die Kanalnuten (9) von Dichtflächen (11) umgeben sind.

6. Scheibenwaschdüse (1) nach einem der Ansprüche 2 bis 5, **dadurch gekennzeichnet, dass** die Hälften des Strahlenchips (3) gelenkig miteinander durch einen flexiblen Materialstreifen (7) verbunden sind.

7. Scheibenwaschdüse (1) nach einem Ansprüche 2 bis 6, **dadurch gekennzeichnet, dass** die Hälften (3a, 3b), welchen den Strahlenchip (3) bilden, Positioniervorrichtungen wie beispielsweise Stifte (19) und Steckaufnahmen (20) aufweisen.

8. Scheibenwaschdüse (1) nach einem der Ansprüche 2 bis 7, **dadurch gekennzeichnet, dass** die Kanalnuten (9) in jeder der Trennflächen der Hälften (3a, 3b) vorgesehen sind, wobei komplementäre Kanalnuten (9) jeder Hälfte im zusammengesetzten Zustand die Fluidkanäle (10) formen.

9. Scheibenwaschdüse (1) nach Anspruch 8, **dadurch gekennzeichnet, dass** die Trennebene (8) des Strahlchips (3) die Achse der Fluidkanäle (10) schneidet.

10. Scheibenwaschdüse (1) nach einem der Ansprüche 2 bis 9, **dadurch gekennzeichnet, dass** eine Hälfte des Chips (3) eine zentrale Öffnung (13) aufweist, die sich über die gesamte Dicke der Hälfte erstreckt, um eine Fluidkammer (15) zu bilden.

11. Scheibenwaschdüse (1) nach einem der vorhergehenden Ansprüche, **dadurch gekennzeichnet, dass** der Strahlenchip (3) Einsetzführungen aufweist, die so ausgebildet sind, dass sie eine korrekte Ausrichtung bei der Montage gewährleisten.

## Revendications

1. Buse de lavage pour pare-brise (1) comprenant un corps de buse (2) avec une pièce de raccordement pour l'alimentation de la buse en liquide de lavage et avec un logement (6) destiné à recevoir une plaquette de gicleur (3), ladite plaquette de gicleur comporte au moins deux conduites de liquide lesquelles forment avec le liquide de lavage devant être déposé de multiples jets minces,
**caractérisée en ce que** la plaquette de gicleur (3) présente au moins deux plans de joint rabattants qui viennent en appui l'un contre l'autre dans un rapport d'étanchéité et qui forment les conduites de liquide (10) lorsqu'ils sont ajustés l'un contre l'autre et que la plaquette de gicleur est conformée à la manière d'une pièce d'insertion interchangeable.

2. Buse de lavage pour pare-brise (1) selon la revendication 1, **caractérisée en ce que** la plaquette de gicleur (3) est constituée par deux moitiés complémentaires (3a, 3b) qui, avant d'être introduites dans le compartiment (6), sont ajustées l'une contre l'autre de façon à former une pièce d'un seul tenant.

3. Buse de lavage pour pare-brise (1) selon l'une quelconque des revendications précédentes, **caractérisée en ce que** au moins l'une des moitiés (3a, 3b) comporte au moins un sillon de conduite (9) lequel forme au moins partiellement ladite conduite de liquide (10).

4. Buse de lavage pour pare-brise (1) selon l'une quelconque des revendications précédentes, **caractérisée en ce que** les axes des conduites de liquide (10) sont orientés de telle sorte qu'elles forment deux jets divergents, mais ne se rencontrent pas.

5. Buse de lavage pour pare-brise (1) selon l'une quelconque des revendications précédentes, **caractérisée en ce que** les sillons de conduites (9) sont entourés par des surfaces d'étanchéité (11).

6. Buse de lavage pour pare-brise (1) selon l'une quelconque des revendications 2 à 5, **caractérisée en ce que** les moitiés de la plaquette de gicleur (3) sont articulées l'une avec l'autre par le moyen d'une bande de matière flexible (7).

7. Buse de lavage pour pare-brise (1) selon l'une quelconque des revendications 2 à 6, **caractérisée en ce que** les moitiés (3a, 3b) formant la plaquette de gicleur (3) comportent des dispositifs de positionnement tels que des ergots (19) et des alvéoles (20).

8. Buse de lavage pour pare-brise (1) selon l'une quelconque des revendications 2 à 7, **caractérisée en ce que** les sillons des canaux (9) sont disposés sur chacun des plans de joint des moitiés (3a, 3b), les sillons complémentaires des conduites (9) de chaque moitié formant de la sorte les conduites de liquide (10) lorsque elles sont ajustées ensemble.

9. Buse de lavage pour pare-brise (1) selon la revendication 8, **caractérisée en ce que** le plan de clivage de la plaquette de gicleur (3) fait un angle avec l'axe des conduites de liquide (10).

10. Buse de lavage pour pare-brise (1) selon l'une quelconque des revendications 2 à 9, **caractérisée en ce que** l'une des moitiés de la plaquette de gicleur (3) présente une ouverture centrale (13) traversant la totalité de l'épaisseur de ladite moitié de façon à former une chambre de liquide (15).

11. Buse de lavage pour pare-brise (1) selon l'une quelconque des revendications précédentes, **caractérisée en ce que** la plaquette de gicleur (3) comporte des guides d'insertion qui sont réalisés de façon à assurer une orientation correcte pendant l'assemblage.
